# EUROPEAN PATENT SPECIFICATION

(11) **EP 2 536 890 B1**
(45) Date of publication and mention of the grant of the patent: **29.07.2015**
(21) Application number: 11709475.5
(22) Date of filing: 04.02.2011
(51) Int. Cl.: E03F 5/12

(54) **A FILTERING DEVICE**
FILTERVORRICHTUNG
DISPOSITIF DE FILTRATION

(30) Priority: 17.02.2010 IT MO20100031
(43) Date of publication of application: 26.12.2012
(73) Proprietor: Friulana Costruzioni S.r.l., 33074 Vigonovo di Fontanafredda (Pordenone) (IT)
(72) Inventor: DANELUZ, Antonio, I-33080 Prata di Pordenone (Pordenone) (IT); RIGO, Michele, I-33074 Vigonovo di Fontanafredda (Pordenone) (IT)
(74) Representative: Colò, Chiara
(86) International application number: PCT/IB2011/050498
(87) International publication number: WO 2011/101770

(56) References cited:
- WO-A1-94/07585
- WO-A1-99/66141
- DE-A1- 10 158 612
- DE-A1-102007 047 361
- FR-A1- 2 538 722

## Description

The invention relates to a filtering device to be used in a channel of a sewage system, so that a liquid that flows in the channel and has exceeded a preset level can be discharged into a side discharge channel. The filtering device according to the invention can thus be used as a draining device.

Sewage systems comprise a plurality of channels used to convey civil or industrial wastewater toward a collection point, in which a purification plant may be provided. In the event of rain or storms, the rain water causes the level of liquid in the channels to rise rapidly. For this reason, side discharge channels are associated to the channels of sewage systems. Through the side discharge channels, the liquid exceeding a preset level can be discharged, for example into a river.

Since numerous solid objects are usually dispersed in the liquids that flow in sewage systems, it is necessary to use filtering devices to prevent said solid objects from passing into the side discharge channel and from there into the river. However, since the solid objects dispersed in the liquid easily clog the filtering devices, the quantity of liquid that passes into the side discharge channel drastically decreases in a short time. Consequently, an excessive quantity of liquid is conveyed toward the collection point, which may not have the capacity to receive such a quantity.

An object of the invention is to improve the functioning of sewage systems.

Another object is to provide a filtering device that is unlikely to be clogged by any solid objects dispersed in the liquid which circulates in the sewage system. According to the invention, there is provided a filtering device comprising a grate suitable for being positioned in an opening made in a side wall of a channel of a sewage system, a cleaning device, a driving device for moving the cleaning device along the grate so that the cleaning device removes any solid objects from the grate, a control device programmed to activate the driving device when a liquid flowing in the channel exceeds a preset level.

Owing to the invention, it is possible to obtain a filtering device comprising a grate which has reduced risks of being clogged by solid objects dispersed in the liquid flowing in the channel. When the liquid exceeds the preset level and thus starts being discharged through the grate, the control device activates the driving device. The latter, in turn, moves the cleaning device along the grate. The cleaning device thus removes any solid objects that are trapped between the bars of the grate and reintroduces the solid objects into the channel.

The cleaning device comprises at least one rake element.

Those features are also known from WO99/66141 A1.

The rake element of the invention is simple to construct and is effective in keeping the grate of the cleaning device clean.

The rake element has a plurality of passage holes, for example shaped as slots, each passage hole being arranged for receiving a longitudinal bar of the grate. This conformation of the rake element allows a cleaning member to be defined between two consecutive passage holes, the cleaning member having a good stiffness and being capable of engaging a longitudinal slit of the grate.

In an embodiment, the rake element comprises a front portion shaped as a "V", which protrudes from a face of the grate.

The "V" shape of the front portion is very effective for pushing toward the middle of the channel any solid objects that are removed from the grate by the rake element, both during upward and downward movements of the rake element.

In an embodiment, the "V"-shaped front portion comprises an upper part and a lower part, the rake element comprising joining means for joining the upper part to the lower part.

The joining means are arranged on a side of the grate opposite the face from which the "V"-shaped front portion protrudes.

The joining means allow the stiffness of the rake element, to be increased. This reduces the risks of the rake element being deformed as it removes from the grate particularly heavy solid objects, or objects that are firmly stuck in the grate.

In an embodiment, the cleaning device comprises two rake elements connected to one another on a back side of the grate, so that the two rake elements can be moved jointly.

Using two rake elements it is possible to keep the grate clean in an effective manner without adopting excessive speeds for the rake elements. Moreover, since the rake elements are connected to one another, a single driving device can be used to move both the rake elements, which simplifies the structure of the filtering device.

In an embodiment, the filtering device comprises guide means arranged for guiding the cleaning device while the cleaning device is being moved by the driving device, in such a way that the cleaning device interacts with the grate both during a forward stroke and during a back stroke.

The cleaning device can thus remove solid objects from the grate during both strokes. The solid objects removed from the grate are subsequently carried away by the main flow of the liquid present in the channel.

In an embodiment, the driving device may comprise a hydraulic actuator containing a working fluid.

Detecting means can also be provided, the detecting means being suitable for detecting the pressure of the working fluid in the hydraulic actuator in order to detect an end-stroke position of the hydraulic actuator. The detecting means can detect when the pressure of the working fluid inside a chamber of the hydraulic actuator reaches a preset value, which corresponds to the end-stroke position of the hydraulic actuator. When this occurs, the direction of movement of the cleaning device is reversed.

In this manner, the end-stroke position is detected without using any systems external to the hydraulic actuator, which would have to be submerged in the channel, so that their reliability could decrease over time.

The driving means can use vegetable oil as a working fluid.

The vegetable oil makes it possible to reduce the risks of contaminating the liquid flowing in the channel, in case the hydraulic actuator breaks and there is leakage of working fluid.

In an embodiment, the grate comprises an outer frame having a lower crossbar and an upper crossbar connected to one another by a pair of posts.

The grate comprises a plurality of longitudinal bars which can be substantially parallel to the posts.

The longitudinal bars can be delimited by respective side surfaces parallel to the posts or inclined in relation to the posts.

If the side surfaces of the longitudinal bars are inclined in relation to the posts, it is possible to decrease the resistance that the longitudinal bars offer to the passage of the liquid toward a side discharge channel.

The invention can be better understood and implemented with reference to the appended drawings, which illustrate some non-restrictive example embodiments, in which:
Figure 1 is a schematic perspective view of a channel provided with a filtering device;
Figure 2 is a cross section of the channel in Figure 1, taken along a vertical plane passing through the filtering device;
Figure 3 is a front schematic perspective view of a filtering device;
Figure 4 is a perspective view, enlarged and interrupted, showing a rake element of the filtering device;
Figure 5 is a rear view of the filtering device shown in Figure 1, in a first working configuration;
Figure 6 is a side view of the filtering device of Figure 5;
Figure 7 is a rear view of the filtering device shown in Figure 1, in a second working configuration;
Figure 8 is a side view of the filtering device of Figure 7;
Figure 9 is a schematic view from above showing a channel provided with a filtering device according to an alternative embodiment;
Figure 10 is a view like the one in Figure 2, showing a channel according to another alternative embodiment.

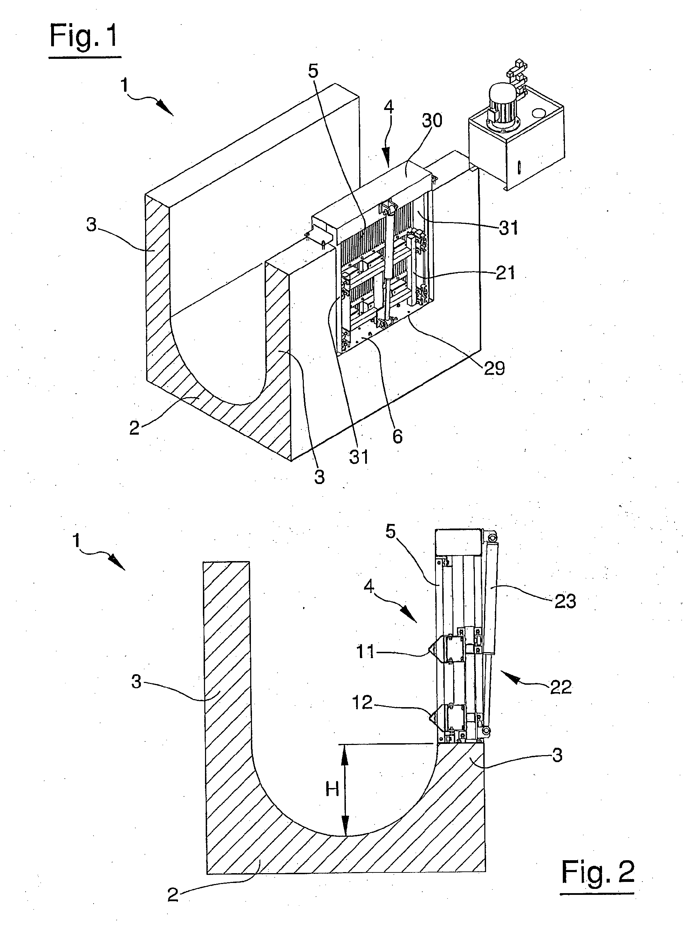

Figures 1 and 2 show a channel 1 of a sewage system, the channel 1 being suitable for receiving the discharges, prevalently liquid, originating from civil or industrial installations in order to convey them toward a collection point, in which a purification plant may be provided. The channel 1 has a bottom 2 and a pair of side walls 3, the side walls 3 facing each other. In one of the side walls 3 a filtering device 4 is arranged. Through the filtering device 4, the channel 1 communicates with a side discharge channel not shown in Figures 1 and 2. The filtering device 4 is positioned at a height H from the bottom 2 of the channel 1, the height H being chosen so as to be greater than the height of the liquid flowing in the channel 1 under normal conditions. In this manner, the liquid will normally flow in the channel 1 without interacting with the filtering device 4 and therefore without passing into the side discharge channel.

When, for example because of rainfall, the level of the liquid inside the channel 1 becomes greater than the height H, the liquid which exceeds the height H will pass into the side discharge channel, through the filtering device 4. The latter has the task of retaining inside the channel 1 any solid objects that may be dispersed in the liquid. Owing to the filtering device 4, the solid objects having a size larger than a minimum preset size will not pass into the side discharge channel. This prevents said solid objects from reaching the rivers which the side discharge channels of sewage systems usually empty into.

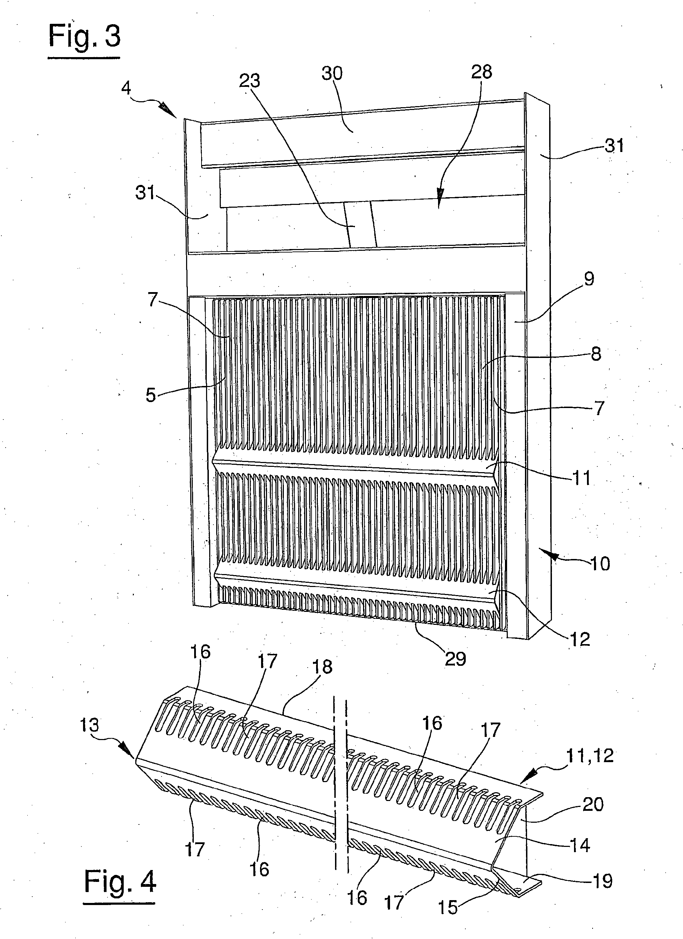

The filtering device 4 comprises a grate 5 suitable for being positioned in an opening 6 made in the side wall 3. As shown in Figures 3, 5 and 7, the grate 5 can comprise a plurality of longitudinal bars 7, between which a plurality of longitudinal slits 8 are defined. The liquid can pass through the longitudinal slits 8. During operation, the grate 5 can be positioned in such a way that the longitudinal bars 7 are vertical.

In the example illustrated, the grate 5 has a substantially flat shape, though it is possible to adopt geometries other than a flat geometry.

The longitudinal bars 7 are arranged inside an outer frame 9, having a substantially quadrangular shape. The outer frame 9 comprises a lower crossbar 29, an upper crossbar 30 and a pair of posts 31 which connect the upper crossbar 30 to the lower crossbar 29. In the example illustrated, the lower crossbar 29 and the upper crossbar 30 are parallel to each other and extend along respective horizontal directions. The posts 31 can extend vertically. The lower crossbar 29, the upper crossbar 30 and the posts 31 can be constructed from bent sheet metal.

The filtering device 4 further comprises a cleaning device 10, which is movable along the grate 5 so as to remove any solid objects that have remained trapped between the longitudinal bars 7.

The cleaning device 10 can comprise at least one rake element provided with a plurality of cleaning members which engage the longitudinal slits 8. In the example illustrated, the cleaning device 10 comprises two rake elements, i.e. an upper rake element 11 and a lower rake element 12. It is however possible to provide a single rake element or a number of rake elements greater than two.

Each rake element extends along a direction that is transverse, for example perpendicular, to the direction in which the longitudinal bars 7 extend. In the example illustrated, in which the longitudinal bars 7 are vertical, each rake element extends horizontally. The upper rake element 11 and lower rake element 12 are thus parallel to each other.

Each rake element has a length that is substantially equal to the width of the grate 5.

As shown in Figure 4, each rake element 11, 12 comprises a front portion 13 shaped as a "V" with a horizontal axis. The front portion 13 protrudes from a face of the grate 5 which is turned toward the inside of the channel 1. In other words, the front portion 13 partially projects into the channel 1.

Each rake element 11, 12 comprises an upper part 14 and a lower part 15, both inclined, which meet in front of the grate 5, in such a way as to form an angle of less than 180°, e.g. an acute angle. The upper part 14 and the lower part 15 define the front portion 13 of the grate 5 and can be shaped as inclined planes.

Each rake element 11, 12 has a plurality of holes, which can be shaped as slots 16, each of which is arranged for receiving a corresponding longitudinal bar 7. In particular, the upper part 14 has a first row of slots 16, whereas the lower part 15 has a second row of slots 16. Each slot 16 in the first row is aligned with a corresponding slot 16 in the second row, so that the two slots can receive the same longitudinal bar 7.

Each rake element 11, 12 comprises an upper edge zone 18 and a lower edge zone 19, which extend in a continuous manner from a right end to a left end of the rake element.

Two consecutive slots 16 of the same row are separated by a portion of material 17, which defines a sort of finger of the rake element 11, 12. When the cleaning device 10 is moved, the portion of material 17 slides in a longitudinal slit 8 and removes therefrom any solid objects. Each portion of material 17 thus acts as a cleaning member for keeping the corresponding longitudinal slit 8 clean. The cleaning members thus defined do not have a cantilever structure like the teeth of normal combs, but are rather joined to one another both in front of the grate 5 and behind the grate 5. This gives high stiffness to the cleaning members and reduces the risk of the cleaning members becoming deformed while they remove the solid objects from the longitudinal slits 8.

The upper part 14 and the lower part 15 of the rake elements 11, 12 are connected to one another by joining means positioned behind the grate 5, that is, on the side of the grate 5 facing the side discharge channel.

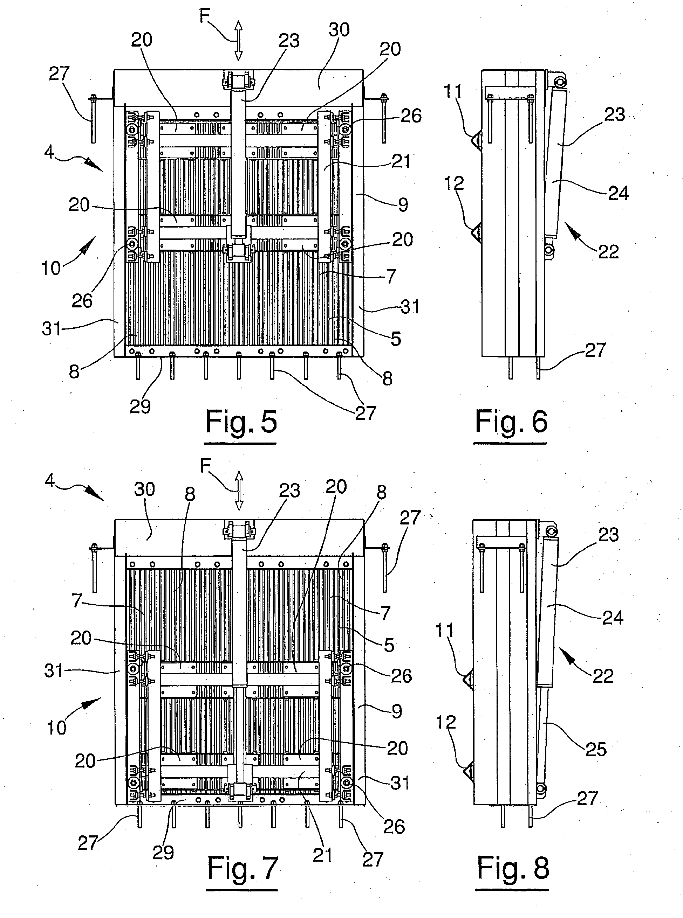

As shown in Figures 5 and 7, the joining means can comprise a plurality of joining elements 20, for example in the form of plates, which join the upper edge zone 18 to the lower edge zone 19. The joining means ensure that each rake element 11, 12 has a closed cross section, at least in certain areas, so as to increase the stiffness of the rake elements 11, 12. This decreases the risk of the rake elements 11, 12 becoming deformed while they detach the solid objects from the grate 5.

The upper rake element 11 and the lower rake element 12 are connected to one another on a back side of the grate 5, that is, on a side of the grate 5 opposite the one facing the channel 1. The upper rake element 11 and the lower rake element 12 can be connected to one another by means of a rear framework 21, comprising for example a pair of horizontal bars, each fixed to a rake element, and a pair of vertical bars which connect the horizontal bars together. In this manner the upper rake element 11 and the lower rake element 12 form a single unit and can be moved jointly.

The filtering device 4 comprises a driving device 22 for moving the cleaning device 10 along the grate 5 with alternating motion. The driving device 22 moves the cleaning device 10 along a direction F parallel to the longitudinal bars 7, as indicated in Figures 5 and 7. In the example illustrated, the direction F is vertical.

The driving device 22 is positioned behind the grate 5, that is, in a semi-space opposite a further semi-space in which the front portion 13 of the rake elements 11, 12 is located, in relation to the grate 5. During use, the driving device 22 is therefore located inside the side discharge channel. This allows the driving device 22 not to occupy space alongside the posts 31.

Guide means are provided, the guide means being arranged for guiding the cleaning device 10 while the cleaning device 10 is moved along the direction F, in such a way that the cleaning device 10 interacts with the grate 5 both during a forward stroke, for example upwards, and during a back stroke, for example downwards.

The guide means can comprise a plurality of guide wheels 26 fixed to the rear framework 21 and movable inside respective seats formed on the outer frame 9. It is however also possible to use guide means of a different type. For example, in an embodiment that is not shown, the guide means can comprise at least a pair of sliding blocks, fixed to two opposite sides of the rear framework 21 and movable inside respective seats formed on the outer frame 9. The sliding blocks can be made of a material having a low coefficient of friction, for example a polymeric material.

The driving device 22 can comprise a hydraulic actuator 23 having a first end fixed to the outer frame 9 and a second end fixed to the rear framework 21. The hydraulic actuator 23 can comprise a cylinder 24 in which a stem 25 is received. The stem 25 is movable between an extended position, in which the stem 25 comes out the cylinder 24, and a retracted position, in which the stem 25 is almost entirely contained inside the cylinder 24. The retracted position is shown in Figures 5 and 6, while the extended position is shown in Figures 7 and 8. When the stem 25 moves between the extended position and the retracted position, the cleaning device 10 is moved between a low position and a high position. In the low position, the lower rake element 12 is near a lower end of the grate 5, whereas in the high position the upper rake element 11 is near an upper end of the grate 5. In the example shown, the low position of the cleaning device 10 corresponds to the extended position of the stem 25 and is shown in Figures 7 and 8, whereas the high position of the cleaning device 10 corresponds to the retracted position of the stem 25 and is shown in Figures 5 and 6, but the opposite could also occur.

Inside the hydraulic actuator 23 a working fluid is present. The working fluid can comprise vegetable oil. This makes it possible to limit the pollution of the liquid flowing in the channel 1 and in the side discharge channel, in case the hydraulic actuator 23 breaks and there is leakage of working fluid into the sewage system.

Detecting means can be associated to the driving device 22, the detecting means being arranged for detecting when the pressure of the working fluid in the hydraulic actuator 23 exceeds a preset value, which may correspond to an end-stroke position of the hydraulic actuator 23.

For example, the hydraulic actuator 23 can comprise a double-acting cylinder having a first chamber and a second chamber. The detecting means can comprise a first manostat arranged for detecting when the pressure of the working fluid present in the first chamber exceeds a first threshold value corresponding to a lower end-stroke position of the stem 25. A second manostat can furthermore detect when the pressure of the working fluid present in the second chamber exceeds a second threshold value, corresponding to an upper end-stroke position of the stem 25. The detecting means can be positioned in a hydraulic central unit which controls the operation of the hydraulic actuator 23.

The detecting means allow to determine when the stem 25 has reached the lower end-stroke position and the upper end-stroke position, corresponding to the low and high positions of the cleaning device 10. When one of the two above-mentioned end-stroke positions has been reached, the movement of the stem 25 can be reversed. In this manner it is possible to avoid using mechanical end-stroke detection devices positioned beside the grate 5, which mechanical end-stroke detection devices could rapidly break in contact with the liquid of the sewage system and would not be easy to be replaced.

The filtering device 4 comprises a control device, not shown, which is programmed to activate the driving device 22, and thus move the cleaning device 10, when the liquid present in the channel 1 has exceeded a preset level. For example, the control device can be programmed in such a way as to activate the driving device 22 when the level of the liquid present in the channel 1 has exceeded the height H. The control device comprises a control unit to which a level sensor can be connected, the level sensor being arranged for detecting when the liquid present in the channel 1 exceeds the preset level.

The control device can furthermore be so programmed as to move the cleaning device 10 for working periods of a preset duration, two consecutive working periods being separated by pauses having a pre-established length. Both the duration of the working periods and the length of the pause can be selected by an operator. For example, the cleaning device 10 can be activated for working periods of 3-4 minutes approximately every 36-48 hours. In this manner it is possible to avoid that the cleaning device 10 and the associated driving device 22 remain stationary for very long periods in the absence of rainfall, which could generate operating difficulties.

In an alternative embodiment, the filtering device 4 can have a discharge opening 28, shown only in Figure 3, located above the grate 5 in order to discharge the liquid whenever, in an emergency condition, the level of the liquid is higher than the grate 5. The discharge opening 28 allows any excess liquid to be discharged, which excess liquid accumulates in the channel 1 in the event of particularly violent storms, and which the grate 5 would not be able to dispose of.

The filtering device 4 is fixed to the edges of the opening 6 owing to fastening means which can comprise a plurality of threaded elements 27 that project from the outer frame 9. The threaded elements 27 are suitable for being anchored to the side wall, for example by means of a synthetic resin.

During operation, when the level of the liquid inside the channel 1 is lower than a preset level, the driving device 22 is not activated and the cleaning device 10 consequently remains stationary. The liquid flows inside the channel 1 without passing into the side discharge channel, whose inlet is located at a height above the level of the liquid. Consequently, the filtering device 4 does not work and the grate 5 cannot be dirtied. It is therefore not necessary for the cleaning device 10 to perform its cleaning action.

If, for example in the event of rainfall, the level of the liquid in the channel 1 rises and exceeds the height H, the liquid will start being discharged into the side discharge channel through the grate 5. When the height of the liquid in the channel 1 exceeds a preset level, which may (though not necessarily) coincide with the height H, the control unit will receive a signal from the level sensor. Consequently, the control unit will send a signal to the hydraulic central unit, which will activate the driving device 22. The latter will therefore move the cleaning device 10 alternately downwards or upwards along the grate 5. The cleaning members of the upper rake element 11 and of the lower rake element 12 will thus slide in the longitudinal slits 8 and remove therefrom any solid objects contained in the liquid which have remained trapped in the grate 5. These solid objects will be reintroduced into the channel 1, so that the liquid flowing in the channel 1 can carry the solid objects toward the collection point. Since the guide means ensure that the cleaning device 10 interacts with the grate 5 both during the upwards stroke and during the downwards stroke, the cleaning device 10 is capable of removing solid objects from the grate 5 during both strokes. In particular, when the cleaning device 10 moves upwards, any solid objects removed from the longitudinal slits 8 will fall on the upper part 14 of the rake elements 11, 12 and slide toward the inside of the channel lowing to the tilted configuration of the upper part 14. When, on the other hand, the cleaning device 10 moves downwards, any solid objects removed from the longitudinal slits 8 will be pushed toward the middle of the channel 1 by the lower part 15 of the rake elements 11, 12, owing to the tilted configuration of the lower part 15.

In this manner the grate 5 is kept constantly clean and can thus filter the liquid directed toward the side discharge channel with a high degree of efficiency.

The filtering device 4 designed as described above is simple and robust at the same time and does not require frequent maintenance operations. Such operations would be difficult to be performed in a hostile environment such as a sewage system.

In the example disclosed above, the longitudinal bars 7 which form the grate 5 have a quadrangular cross section and are arranged parallel to the posts 31.

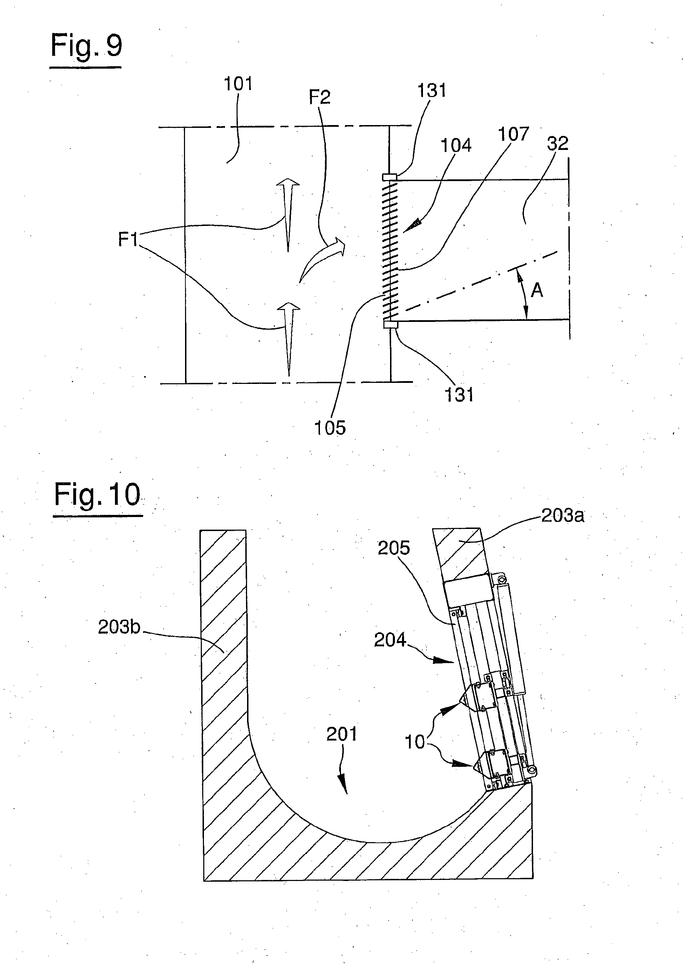

Figure 9 shows a filtering device 104 according to an alternative embodiment, the filtering device 104 being positioned in an opening of a side wall of a channel 101 to enable the liquid which exceeds a preset level in the channel 101 to be discharged into a side discharge channel 32.

The filtering device 104 comprises a grate 105 having an outer frame that includes a pair of posts 131. The filtering device 104 differs from the filtering device 4 disclosed previously because the grate 105 has a plurality of longitudinal bars 107, which can be vertical, but are however arranged in a position that is inclined in relation to the posts 131. In more detail, the longitudinal bars 107 can each be shaped as a prism of rectangular cross section having a side surface that is inclined in relation to the post 131. In other words, the side surface of each longitudinal bar 107 can extend in a plane that forms an angle A with a plane defined by a side face of the post 131. The angle A is other than 90°, in particular it is less than 90°, for example around 45°.

Owing to this conformation of the longitudinal bars 107, the liquid that exceeds a preset height can be discharged more easily into the side discharge channel 32. In fact, the longitudinal bars 107 are arranged obliquely, i.e. neither parallel nor perpendicular to a direction of flow F1 along which the liquid flows inside the channel 1. The tilted conformation of the longitudinal bars 107 prevents the liquid that is diverted from the direction F1 in order to pass into the side discharge channel 32, as shown by the arrow F2, from frontally impacting against the longitudinal bars 107, as would occur if the longitudinal bars 107 were arranged perpendicular to the direction of flow F1.

Figure 10 shows a filtering device 204 according to a further alternative embodiment. The parts of the filtering device 204 that are common to the filtering device 4 shown in Figures 1 to 8 are indicated with the same reference numbers used previously and will not be described again in detail. The filtering device 204 is installed in an opening obtained in a side wall 203a of a channel 201, the channel 201 having a further side wall 203b opposite the side wall 203a. The filtering device 204 comprises a grate 205 positioned in such a way as to be tilted toward the inside of the channel 201. In other words, an upper region of the grate 205 is closer to the further side wall 203b compared to a lower region of the grate 205. In this manner, any solid objects removed by the cleaning device 10 will be more easily detached from the grate 205 and fall more easily, under gravity, into the channel 201.

In order to tilt the grate 205 toward the inside of the channel 201, it is possible to provide a side wall 203a that is inclined in relation to a bottom wall of the channel 201, as shown in the example in Figure 10. In an alternative embodiment, it is also possible to install the grate 205 in a tilted position in a vertical side wall, for example by inclining the outer frame of the grate in relation to the vertical side wall.

In an embodiment that is not shown, two or more filtering devices according to any of the previously disclosed embodiments can be positioned one beside the other. In this manner it is possible to obtain modular compositions in which the most suitable number of filtering devices can be chosen according to the dimensions and flow rate of the channel.

These modular compositions can be obtained very easily because the filtering devices according to the invention do not comprise driving or control mechanisms positioned beside the grate. Consequently, two or more filtering devices can be placed side by side without creating significant interruptions in the flow of liquid toward the side discharge channel between one grate and another.

## Claims

1. A filtering device comprising a grate (5; 105; 205) suitable for being positioned in an opening (6), the opening (6) being made in a side wall (3; 203a) of a channel (1; 101; 201) of a sewage system, a cleaning device (10), a driving device (22) for moving the cleaning device (10) along the grate (5; 105; 205) so that the cleaning device (10) removes solid objects from the grate (5; 105; 205), a control device programmed for activating the driving device (22) when a liquid flowing in the channel (1; 101; 201) exceeds a preset level, the cleaning device (10) comprising at least one rake element (11, 12) having a plurality of passage holes, each passage hole receiving a longitudinal bar (7; 107) of the grate (5; 105; 205).

2. A filtering device according to claim 1, and further comprising a level sensor connected to the control device, the level sensor being arranged for generating a signal when the liquid flowing in the channel (1; 101; 201) exceeds said preset level, said signal serving to activate the driving device (22).

3. A filtering device according to claim 1 or 2, wherein the control device is programmed so as to activate the driving device (22) for working periods having a preset duration, said working periods being separated by pauses having a pre-established length, in order to avoid that the driving device (22) is blocked during drought periods.

4. A filtering device according to any preceding claim, wherein the passage holes of said plurality are shaped as slots (16).

5. A filtering device according to any preceding claim, wherein said at least one rake element (11, 12) comprises a front portion (13) shaped as a "V", which protrudes from a face of the grate (5; 105; 205).

6. A filtering device according to claim 5, wherein said front portion (13) comprises an upper part (14) and a lower part (15) which are joined to one another in front of the grate (5; 105; 205), said at least one rake element (11, 12) comprising joining means (20) arranged on a side of the grate (5; 105; 205) opposite to said face for joining the upper part (14) to the lower part (15) also behind the grate (5; 105; 205).

7. A filtering device according to any preceding claim, wherein the cleaning device (10) comprises two rake elements (11, 12) connected to one another on a back side of the grate (5; 105; 205), so that the two rake elements (11, 12) can be moved jointly.

8. A filtering device according to any preceding claim, and further comprising guide means (26) arranged for guiding the cleaning device (10) in such a way that the cleaning device (10) interacts with the grate (5; 105; 205) both during a forward stroke and during a back stroke.

9. A filtering device according to any preceding claim, wherein the driving device (22) comprises a hydraulic actuator (23) which contains a working fluid, detecting means being provided for detecting when pressure of the working fluid in the hydraulic actuator (23) exceeds a preset value, in order to detect an end-stroke position of the hydraulic actuator (23).

10. A filtering device according to any preceding claim, wherein the driving device (22) uses vegetable oil as a working fluid.

11. A filtering device according to any preceding claim, and further comprising an outer frame having a lower crossbar and an upper crossbar connected to one another by a pair of posts (131), the grate comprising a plurality of longitudinal bars (107) which extend in a direction substantially parallel to the posts (131), the longitudinal bars (107) being delimited by respective side surfaces which are inclined in relation to the posts (131) for reducing friction between the liquid, and the longitudinal bars (107).

12. A channel of a sewage system comprising a bottom (2) and a pair of side walls (3; 203a, 203b), a filtering device (4; 104; 204) according to any one of claims 1 to 11 being positioned in one of said side walls (3; 203a) at a preset height (H) in relation to the bottom (2).

13. A channel according to claim 12, wherein the grate (205) is tilted towards the inside of the channel (201), so that the solid objects removed from the grate (205) easily fall into the channel (201).

14. Use of a filtering device according to any one of claims 1 to 11 for preventing solid objects that are contained in a liquid flowing in a main channel (1; 101; 201) of a sewage system from entering in a side discharge channel (32), when the liquid exceeds a preset level in the main channel (1; 101; 201).

## Patentansprüche

1. Filtervoirichtung, umfassend ein Gitter (5; 105; 205), das dazu geeignet ist, in einer Öffnung (6) positioniert zu werden, wobei die Öffnung (6) in einer Seitenwand (3; 203a) eines Kanals (1; 101; 201) eines Abwassersystems ausgebildet ist; eine Reinigungsvorrichtung (10), eine Antriebsvorrichtung (22) zum Bewegen der Reinigungsvorrichtung (10) entlang des Gitters (5; 105; 205), sodass die Reinigungsvorrichtung (10) feste Gegenstände vom Gitter (5; 105; 205) entfernt; eine Steuerungsvorrichtung, die dazu programmiert ist, die Antriebsvorrichtung (22) zu aktivieren, wenn eine durch den Kanal (1; 101; 201) strömende Flüssigkeit ein vorgegebenes Niveau überschreitet, wobei die Reinigungsvorrichtung (10) mindestens ein Harkelement (11, 12) mit einer Vielzahl von Durchgangslöchern umfasst, wobei jedes Durchgangsloch eine Längsstange (7; 107) des Gitters (5; 105; 205) aufnimmt.

2. Filtervorrichtung nach Anspruch 1, zudem umfassend einen Niveausensor, der an die Steuerungsvorrichtung angeschlossen ist, wobei der Niveausensor dazu angeordnet ist, ein Signal zu erzeugen, wenn die durch den Kanal (1; 101; 201) strömende Flüssigkeit das vorgegebene Niveau überschreitet, wobei das Signal dazu dient, die Antriebsvorrichtung (22) zu aktivieren.

3. Filtervorrichtung nach Anspruch 1 oder 2, wobei die Steuerungsvorrichtung dazu programmiert ist, die Antriebsvorrichtung (22) für Arbeitsperioden zu aktivieren, die eine vorgegebene Dauer aufweisen, wobei die Arbeitsperioden durch Pausen mit einer vorbestimmten Länge getrennt sind, um die Blockierung der Antriebsvorrichtung (22) während Dürreperioden zu vermeiden.

4. Filtervorrichtung nach einem der vorhergehenden Ansprüche, wobei die Durchgangslöcher dieser Vielzahl wie Schlitze (16) geformt sind.

5. Filtervorrichtung nach einem der vorhergehenden Ansprüche, wobei das mindestens eine Harkelement (11, 12) einen V-förmigen Vorderabschnitt (13) umfasst, der aus einer Seite des Gitters (5; 105; 205) hervorragt.

6. Filtervorrichtung nach Anspruch 5, wobei der Vorderabschnitt (13) einen oberen Teil (14) und einen unteren Teil (15) umfasst, die vor dem Gitter (5; 105, 205) miteinander verbunden sind, wobei das mindestens eine Harkelement (11, 12) Verbindungsmittel (20) umfasst, die auf einer Seite des Gitters (5; 105; 205) angeordnet sind, die der Seite zur Verbindung des oberen Teils (14) mit dem unteren Teil (15) auch hinter dem Gitter (5; 105; 205) gegenüberliegt.

7. Filtervorrichtung nach einem der vorhergehenden Ansprüche, wobei die Reinigungsvorrichtung (10) zwei Harkelemente (11, 12) umfasst, die auf einer Rückseite des Gitters (5; 105, 205) derart aneinander angeschlossen sind, dass die zwei Harkelemente (11, 12) gemeinsam bewegbar sind.

8. Filtervorrichtung nach einem der vorhergehenden Ansprüche, zudem umfassend Führungsmittel (26), die dazu angeordnet sind, die Reinigungsvorrichtung (10) derart zu führen, dass die Reinigungsvorrichtung (10) mit dem Gitter (5; 105; 205) sowohl während eines Vorwärtshubs als auch während eines Rückhubs in Wechselwirkung steht.

9. Filtervorrichtung nach einem der vorhergehenden Ansprüche, wobei die Antriebsvorrichtung (22) einen hydraulischen Aktuator (23) umfasst, der ein Arbeitsfluid enthält, wobei Erfassungsmittel zum Erfassen der Überschreitung des vorgegebenen Wertes des Arbeitsfluiddrucks im hydraulischen Aktuator (23) vorgesehen sind, um eine Endanschlagsposition des hydraulischen Aktuators (23) zu erfassen.

10. Filtervorrichtung nach einem der vorhergehenden Ansprüche, wobei die Antriebsvorrichtung (22) Pflanzenöl als Arbeitsfluid verwendet.

11. Filtervorrichtung nach einem der vorhergehenden Ansprüche, zudem umfassend einen äußeren Rahmen mit einer unteren Traverse und einer oberen Traverse, die aneinander durch ein Paar Pfosten (131) angeschlossen sind, wobei das Gitter eine Vielzahl von Längsstangen (107) umfasst, die sich in einer zu den Pfosten (131) im Wesentlichen parallelen Richtung erstrecken, wobei die Längsstangen (107) durch die jeweiligen zu den Pfosten (131) geneigten seitlichen Oberflächen begrenzt sind, um die Reibung zwischen der Flüssigkeit und den Längsstangen (107) zu verringern.

12. Kanal eines Abwassersystems, umfassend einen Boden (2) und ein Paar Seitenwände (3; 203a, 203b), wobei eine Filtervorrichtung (4; 104; 204) nach einem der Ansprüche 1 bis 11 auf einer zum Boden (2) vorgegebenen Höhe (H) in einer der Seitenwände (3; 203a) positioniert ist.

13. Kanal nach Anspruch 12, wobei das Gitter (205) zur Innenseite des Kanals (201) geneigt ist, sodass die vom Gitter (205) entfernten festen Gegenstände in den Kanal (201) einfach fallen.

14. Verwerdung einer Filtervorrichtung nach einem der Ansprüche 1 bis 11, um den Eintritt der festen Gegenstände, die in einer durch einen Hauptkanal (1; 101; 201) eines Abwassersystems strömenden Flüssigkeit enthalten sind, in einen seitlichen Entleerungskanal (32) zu vermeiden, wenn die Flüssigkeit ein vorgegebenes Niveau im Hauptkanal (1; 101; 201) überschreitet.

## Revendications

1. Dispositif de filtration comprenant une grille (5; 105; 205) pouvant être positionnée dans une ouverture (6), l'ouverture (6) étant réalisée dans une paroi latérale (3; 203a) d'un canal (1; 101; 201) d'un système d'évacuation des eaux usées, un dispositif de nettoyage (10), un dispositif d'entraînement (22) pour déplacer le dispositif de nettoyage (10) le long de la grille (5; 105; 205) de sorte que le dispositif de nettoyage (10) retire des objets solides de la grille (5; 105; 205), un dispositif de commande programmé pour actionner le dispositif d'entraînement (22) lorsqu'un liquide s'écoulant dans le canal (1; 101; 201) dépasse un niveau prédéterminé, le dispositif de nettoyage (10) comprenant au moins un élément à râteau (11, 12) présentant une pluralité de trous de passage, chaque trou de passage recevant une barrie longitudinale (7; 107) de la grille (5; 105; 205).

2. Dispositif de filtration selon la revendication 1, comprenant également un capteur de niveau uni au dispositif de commande, le capteur de niveau étant disposé pour générer un signal quand le liquide s'écoulant dans le canal ( 1; 101; 201 ) dépasse ledit niveau prédéterminé, ledit signal servant à actionner le dispositif d'entraînement (22).

3. Dispositif de filtration selon les revendications 1 ou 2, dans lequel le dispositif de commande est programmé de sorte à actionner le dispositif d'entraînement (22) durant des périodes de fonctionnement ayant une durée prédéterminée, lesdites périodes de fonctionnement étant séparées par des pauses ayant une longueur préétablie, pour éviter que le dispositif d'entraînement (22) ne se bloque pendant des périodes de sécheresse.

4. Dispositif de filtration selon l'une quelconque des revendications précédentes, dans lequel les trous de passage de ladite pluralité sont en forme de fentes (16).

5. Dispositif de filtration selon l'une quelconque des revendications précédentes, dans lequel ledit au moins un élément à râteau (11, 12) comprend une portion frontale (13) en forme de « V », qui se projette depuis une face de la grille (5; 105; 205).

6. Dispositif de filtration selon la revendication 5, dans lequel ladite portion frontale (13) comprend une partie supérieure (14) et une partie inférieure (15) qui se réunissent l'une à l'autre devant la grille (5; 105; 205), ledit au moins un élément à râteau (11, 12) comprenant des moyens d'union (20) disposés sur un côté de la grille (5; 105; 205) opposé à ladite face pour unir la partie supérieure (14) à la partie inférieure (15) aussi derrière la grille (5; 105; 205).

7. Dispositif de filtration selon l'une quelconque des revendications précédentes, dans lequel le dispositif de nettoyage (10) comprend deux éléments à râteau (11, 12) unis l'un à l'autre sur un côté postérieur de la grille (5; 105; 205), de sorte que les deux éléments à râteau (11, 12) puissent se déplacer ensemble.

8. Dispositif de filtration selon l'une quelconque des revendications précédentes, comprenant également des moyens de guidage (26) disposés pour guider le dispositif de nettoyage (10) de manière que le dispositif de nettoyage (10) interagisse avec la grille (5; 105; 205) aussi bien pendant une course vers l'avant que pendant une course vers l'arrière.

9. Dispositif de filtration selon l'une quelconque des revendications précédentes, dans lequel le dispositif d'entraînement (22) comprend un actionneur hydraulique (23) contenant un fluide de travail, des moyens de détection étant montés pour détecter lorsque la pression du fluide de travail, dans l'actionneur hydraulique (23), dépasse une valeur prédéterminée, de sorte à détecter une position fin de course de l'actionneur hydraulique (23).

10. Dispositif de filtration selon l'une quelconque des revendications précédentes, dans lequel le dispositif d'entraînement (22) utilise une huile végétale comme fluide de travail.

11. Dispositif de filtration selon l'une quelconque des revendications précédentes, comprenant également un cadre extérieur ayant une traverse inférieure et une traverse supérieure unies l'une à l'autre par une paire de montants (131), la grille comprenant une pluralité de barres longitudinales (107) qui se déploient dans une direction essentiellement parallèle aux montants (131), les barres longitudinales (107) étant délimitées par des surfaces latérales respectives qui sont inclinées par rapport aux montants (131) pour réduire le frottement entre le liquide et les barres longitudinales (107).

12. Canal d'un système d'évacuation des eaux usées comprenant un fond (2) et une paire de parois latérales (3; 203a, 203b), un dispositif de filtration (4; 104; 204) selon l'une quelconque des revendications 1 à 11 étant positionné dans l'une desdites parois latérales (3; 203a) à une hauteur prédéterminée (H) par rapport au fond (2).

13. Canal selon la revendication 12, dans lequel la grille (205) est inclinée vers l'intérieur du canal (201), de sorte que les objets solides retirés de la grille (205) tombent facilement dans le canal (201).

14. Utilisation d'un dispositif de filtration selon l'une quelconque des revendications 1 à 11 pour empêcher les objets solides contenus dans un liquide s'écoulant dans un canal principal (1; 101; 201) d'un système d'évacuation des eaux usées d'entrer dans un canal d'évacuation latéral (32), quand le liquide dépasse un niveau prédéterminé dans le canal principal (1; 101; 201).
